# EUROPEAN PATENT SPECIFICATION

(11) **EP 4 441 572 B1**
(45) Date of publication and mention of the grant of the patent: **05.11.2025**
(21) Application number: 23730961.2
(22) Date of filing: 09.06.2023
(51) Int. Cl.: G05D 1/00

(54) **A METHOD OF REAL-TIME CONTROLLING A REMOTE DEVICE, AND TRAINING A LEARNING ALGORITHM**
VERFAHREN ZUR ECHTZEITSTEUERUNG EINER ENTFERNTEN VORRICHTUNG UND ZUM TRAINIEREN EINES LERNALGORITHMUS
PROCÉDÉ DE COMMANDE EN TEMPS RÉEL D'UN DISPOSITIF DISTANT, ET ENTRAÎNEMENT D'UN ALGORITHME D'APPRENTISSAGE

(30) Priority: 09.06.2022 NL 2032111
(43) Date of publication of application: 09.10.2024
(73) Proprietor: Look-E B.V., 2548 SN 's-Gravenhage (NL)
(72) Inventor: LUKAART, Martijn Roland, 2548 SN Den Haag (NL)
(74) Representative: V.O.
(86) International application number: PCT/NL2023/050318
(87) International publication number: WO 2023/239237

(56) References cited:
- WO-A1-2021/043904
- CN-A- 110 421 580
- US-A1- 2021 053 229

## Description

### BACKGROUND

Many devices exist which are used to automatically perform tasks previously performed manually by humans. Using a device, such as a robot, may be more economical, faster, more precise, and/or may have many more advantages to performing tasks manually. A device, such as a robot, may be automatically controlled, for example using a control algorithm based on machine learning.

An example of a device arranged for performing a task previously performed manually by humans is a weeding robot. A weeding robot is used to remove or destroy weeds in a farmland. Weeding robots are known comprising a computer vision system arranged to identify weed, and a controller arranged to remove or destroy identified weed.

Another example of a device arranged for performing a task previously performed manually by humans is a garbage removal robot. Such a robot is used to for example remove cigarette buds from a beach. The cigarette buds are automatically identified using a computer vision system.

Sandy environments, such as beaches or farmland, are subject to short-term outside influences such as weather, and longer-term outside influences such as seasons and climate. These changing influences impose difficulties in fully automating tasks to be performed in said environment, such as removal of weeds, removal of garbage, and/or planting seeds, seedlings, and other plants and flora.

US 2021/053229 A1 discloses, according to its Abstract, implementations for coordinating semi-autonomous robots to perform agricultural tasks on a plurality of plants with minimal human intervention. A plurality of robots may be deployed to perform a respective plurality of agricultural tasks. Each agricultural task may be associated with a respective plant of a plurality of plants, and each plant may have been previously designated as a target for one of the agricultural tasks. It may be determined that a given robot has reached an individual plant associated with the respective agricultural task that was assigned to the given robot. Based at least in part on that determination, a manual control interface may be provided at output component(s) of a computing device in network communication with the given robot. The manual control interface may be operable to manually control the given robot to perform the respective agricultural task.

### SUMMARY

It has been observed that fully automatic control of a device, such as a robot, may not yield the desired results, for example in terms of accuracy or yield. This has been particularly observed when the device operates in sandy environments, such as beaches or farmland. It now suggested to manually operate a remote device in real-time by an operator, while aiding the operator with an algorithm trained using input data previously provided by the operator. As such, an algorithm-aided human control strategy and/or human-aided algorithm control strategy may be obtained.

A first aspect provides a method of real-time controlling a remote device according to claim 1. Using the method, the remote device is generally at least in part controlled by a human operator, while using control input provided by the human for training a machine learning algorithm, preferably simultaneously - *i.e.* the algorithm is trained on the fly. The algorithm may, in particular after some amount of training, for example based on at least 100, at least 1000, or at least 5000 user inputs, be used for aiding the human operator in controlling the remote device.

It has further been observed that a combination of human user input and algorithmic control by a machine learning algorithm may lead to an effective control of the device in terms of reliability, accuracy, precision and/or economic costs. It has further been observed that the algorithm may be trained based on labelled training data based on the user input to control the remote device and graphical data of surrounding of the remote device, based on which the user provides the user input. By using the user inputs as training data, an accurate and robust algorithm may be obtained. However, due to the changing influences on the environment, human input may still be preferred, albeit augmented with algorithmic input. The algorithmic input may be used to aid the human operator, for example in providing suggestions for locations of interest.

The algorithm may for example be a machine learning algorithm, arranged to make predictions based on training data previously provided to the algorithm. In particular, the algorithm may be generated or improved using supervised learning - *e.g.* by presenting the algorithm with graphical data and user input data indicative of a location of interest in the graphical data, and optionally a task performed by the remote device based on the user input data.

By using the real-time user input as training data for the algorithm, high quality data may be used for said training, in a cost-effective and/or time-effective manner. Furthermore, when real-time user inputs are used, the algorithm may be constantly updated with recent training data - which training data may for example reflect recent changes in the environment of the remote device, such as changes in weather, lighting, crop growth, or any other relatively short-term changes (short-term being minute/hour/days-scale) and/or long-time changes (weeks/months/years)

Real-time controlling in the context of the present disclosure may be defined as the remote device receiving the control signal in a timeframe preferably in the order of seconds, in the order of microseconds, or more preferably milliseconds after the control signal has been generated and/or sent. A timeframe in the order of minutes or even hours is also envisioned as real-time controlling, but is less preferred as a larger time difference between generating and/or sending, and receiving the control signal may make control of the remote device more difficult for the human operator.

A remote device may be defined as any device whose operator providing the control signal is not directly positioned on or with the device, for example when the operator is not moving together with device. As such, the device may not be provided with direct human operable controllers, such as a steering wheel, gas or brake pedal, joystick, or any other human operable controller.

When the operator is remote from the remote device, the remote device may be required to send, preferably via wireless signal, graphical data to the operator indicative of the surroundings of the remote device. Graphical data may comprise one or more photos, video frames, and/or video streams, which may represent image data in 2D, 3D, black/white, colour, raw format and/or manipulated or enhanced image data, in any combination thereof.

Graphical data may be used to construct a 3D model of the surroundings of the remote device. The 3D model may be used to show the surroundings of the remote device to an operator from a different standpoint as that of the camera or cameras used to obtain the graphical data. As such, the operator may view the surroundings of the remote device from a different perspective as that of the camera or cameras used to obtain the graphical data.

The operator of a remote device may in general be positioned near a working location of the remote device - even within line of sight of the remote device. Alternatively, the operator may be positioned at any other location where the graphical data can be received, and from which a control signal can be sent to the remote device. Graphical data and/or one or more control signals may be transmitted via an internet connection, in particular a low-latency connection or ultra-low latency, for example with a latency in the order or milliseconds. An example of a connection which may be used is a broadband cellular network such as 4G or 5G. Multiple connected wireless and/or wired network connections may be used to transmit graphical data and/or one or more control signals between the operator and the remote device.

The remote operation device may be positioned at a distance from the remote device, for example at a distance in the order of metres or kilometres. In particular, the remote device may be positioned out of sight from the remote operation device. As such, in use, the operator may not have a direct line of sight on at least part of the remote operation device.

The method comprises a step of obtaining graphical data, such as image frames forming a video, of surroundings of the remote device, such as an area of farmland, grassland, or beach. The graphical data may for example be obtained using one or more cameras, which may be one or more digital cameras arranged to capture photographs in one or more digital memories. The graphical data may as such comprise one or more frames, which when played in consecutive order may form a video. The graphical data may be embodied as one or more video streams. A frame may comprise one or more two-dimensional or three-dimensional arrays of pixels, which may for example represent a colour image. The one or more cameras are preferably comprised by the remote device, but some or all cameras may also be provided separate from the remote device. Preferably at least part of the remote device is in the field of view of at least one camera. However, embodiments are envisioned wherein no part of the remote device is in the field of view of one or more or all of the cameras. It will be understood that a separate device may be used for obtaining graphical data. For example, such a reconnaissance device may travel or move ahead of the remote device to obtain graphical data. A reconnaissance device may for example be a robot with wheels or tracks, or a flying drone.

The remote device is typically arranged for performing one or more tasks in the surroundings of the remote device. It may hence be preferred to obtain graphical data of at least part or even more preferably the entire surroundings of the remote device in which the device can perform a task. The graphical data may show at least part of the task being performed, for example to provide visual feedback to the operator.

The method further comprises a step of sending the graphical data to a remote operation device. As a result of sending the graphical data to the remote operation device, the graphical data may be received, stored, and/or processed by the remote operation device. The remote operation device may be any electronic computer device, such as a desktop computer, laptop computer, tablet or smartphone. The remote operation device is preferably provided with one or more displays arranged for visually displaying at least part of the graphical data to the operator. A display may for example be a monitor, but may also be comprised by a virtual reality or augmented reality headset.

The method further comprises a step of obtaining user input data from an operator, which user input data is indicative of a location of interest in the graphical data. A location of interest may represent a single location, which can for example be described as a two-dimensional or three-dimension coordinate, or a particular point or pixel in the graphical data. A location of interest may also represent an area or a volume, which may be defined by a perimeter or bounding box, a set of points and/or a set of pixels in the graphical data. In use, the location of interest may for example represent a weed, or part of a weed such as a stem, a piece of garbage, an area in which the weed is growing, or an area in which the piece of garbage is located.

The user input data may be obtained using one or more input devices, which may be comprised by or operatively connected to the remote operation device. Examples of input devices are keyboards, buttons, switches, mice, joysticks, touchscreens, contactless input devices based for example on hand gestures and any other input devices arranged for receiving an input from a user, for example resulting from a movement of the user and/or a force or torque applied by the user to the input device.

Based on the user input data, which is at least indicative of a location of interest in the graphical data, a control signal is generated for controlling the remote device to perform a task, in particular a task at the location of interest. A control signal may for example: control an actuatable element of the remote device to move along a particular path, to move towards a particular location, to perform a certain action, such as a pick-up, cutting, punching, grabbing, scooping, or pinching action, activate one or more radiation sources, such as lights, of the remote device, activate any other weed damaging device using for example electricity or heat and/or make the remote device perform any other action or task, or any combination thereof.

When the user input data is further used as training data for training a machine learning algorithm, the algorithm may be used for at least one of generating a control signal for controlling the remote device and providing a suggested location of interest in the graphical data to the operator.

In general, in any embodiment of the method disclosed herein, the remote device may be positioned on an indoor or outdoor surface, such as soil, grass, or sand, such as a beach or a plot of farmland. To move along the volume of sand, the remote device may comprise one or more wheels or tracks, a motor for propulsion, or any other means for moving or transporting the remote device along te volume of sand.

For example, the remote device may be a weeding robot arranged for performing a task of destroying or removing weed or a garbage removal robot arranged for performing a task of removing garbage, in particular of a beach.

Preferably, the machine learning algorithm is trained on the fly using the user input data provided by the operator for real-time controlling the remote device. As such, the machine learning algorithm can be constantly updated with the most recent user input data. This most recent user input data may reflect any changes in the surroundings of the remote device, for example due to weather changes. In the context of the present disclosure, on the fly is to be interpreted as the algorithm being trained or updated using recent user input data, wherein recent may be interpreted as within a timeframe of hours, preferably minutes, or more preferably seconds.

In general, the machine learning algorithm may be arranged for providing a suggested location of interest to the operator based on the obtained graphical data, and further comprising a step of visually presenting the suggested location of interest to the operator. The machine learning algorithm may thus be arranged for providing a suggested location of interest as graphical data to the remote operation device.

The suggested location of interest may be visually presented to the operator as an overlay on at least part of the graphical data of the surroundings of the remote device. As the graphical data of the surroundings of the remote device changes, for example when the camera or cameras used to obtained the graphical data are repositioned and/or reoriented, the overlay may move with the graphical data in order for the overlay to remain oriented corresponding to the suggested location of interest. For example, an image recognition algorithm may be used to keep the overlay aligned with the suggested location of interest over time. The overlay may for example be any type of marking. The algorithm may be trained based on graphical data, which graphical data may be labelled using user input data, a control signal based on the user input data, and/or a location of interest. The algorithm in general may output a probability of a suggested location of interest indeed being a location of interest.

In use, the suggested location of interest may be used by the operator to determine which user input to provide. For example, the operator may agree with the suggested location of interest, and provide user input data indicative of a location of interest in the graphical data corresponding to the suggested location of interest. In such a case, this user input data may be used to train the algorithm, in particular confirming that the algorithm has correctly determined a location of interest, and further in particular on the fly.

The user input data may thus be indicative of a confirmation of a suggested location of interest suggested by the machine learning algorithm, and the control signal for controlling the remote device to perform a task may be generated based on the suggested location of interest.

In another example, the operator may disagree with the suggested location of interest. User input data may in such an example reflect that the suggested location of interest is in fact not a location of interest. Also in this case, the user input data may be used to train the algorithm, in particular on the fly to improve the algorithm within a short timeframe. User input data may thus be indicative of a refusal of a suggested location of interest suggested by the machine learning algorithm. Because the operator may be allowed to either confirm or refuse the suggested location of interest, not only the accuracy and/or precision of the remote device is improved, but also the accuracy and/or precision of the algorithm may be improved, preferably in an on the fly manner.

When the user input data is transmitted to the remote operation device, the control signal may be generated by the remote device. When the control signal is generated by the remote operation device, the control signal may be transmitted to the remote device.

When additional graphical data on the location of interest can be obtained after the remote device has been controlled to perform the task at the location of interest, this additional graphical data may be used as training data for training the machine learning algorithm. For example, from the additional graphical data, it may be determined whether the task has been performed correctly, at least partially correctly, and/or incorrectly.

The machine learning algorithm may be trained using the additional graphical data in an unsupervised manner. Alternatively, the machine learning algorithm may be trained using the additional graphical data in a supervised manner. In the latter case, for example, the additional graphical data may be provided to the operator, additional user input data may be obtained from the operator indicative of an evaluation of the task performed at the location of interest, and the additional user input data may be used as training data for training the machine learning algorithm. In particular, the additional user input data may be used for labelling the additional graphical data.

When the algorithm is arranged for providing a suggested location of interest to the operator, embodiments of the method may further comprise storing historic graphical data of surroundings of the remote device, finding matching location data in the historic graphical data matching with the location data indicative of a location of interest in present graphical data, and training the algorithm based on the user input data and the matching location data in the historic graphical data.

When the historic graphical data is used for training the algorithm, the algorithm may be able to provide a suggested location of interest to the operator based on a probability of an event which has yet to happen, but of which some sign is already present. For example when the remote device is a weeding robot, the operator may only be able to visually detect a weed after the weed has sprouted or has grown sufficiently. However, using historic graphical data, the algorithm can be trained to also detect events, such as the growing of weed, before they happen, based on features in the historic graphical data.

For example, the operator may provide as user input data that a location of interest is present at coordinate (x,y), or within a bounding box bound for example by four coordinates. In the location of interest, for example, a weed is present which has to be removed by a weeding robot. The historic graphical data over a particular time frame, for example one or more hours ago, one or more days ago, or even one or more weeks ago, may be labelled with the user input data, for example the coordinate or bounding box. As such, the algorithm may be trained to find features at or in the location of interest indicative that in the future, for example within hours, days, or even weeks, a weed may grow at the location of interest. This in turn may result in the algorithm being able to provide a suggested location of interest to the operator, without the weed already being visible to the operator.

In general, a single operator may receive graphical data from multiple remote locations and/or multiple remote devices such that the single operator can control multiple remote devices, preferably simultaneously and/or using a single remote operation device.

The algorithm may be trained using user input data from multiple operators and/or using user input data used for generating control signals for multiple remote devices and/or using user input data used for generating control signals to have a single remote device performing multiple tasks. As such, a more accurate, fast, robust and/or precise algorithm may be obtained.

The same algorithm may be used for generating at least part of a control signal for controlling multiple remote devices and/or providing a suggested location of interest to multiple operators.

In general, the algorithm may be stored on an electronic memory. As such, a computer-readable data carrier having stored thereon the algorithm as described above is also envisioned. The algorithm may be run using an electronic processing device, such as a CPU and/or GPU. The method may thus be an at least partially or even fully computer-implemented method. The algorithm may be ran for example on a server, for example a cloud server, or on a local device. The algorithm may be ran on a dedicated electronic computer device, on the remote operation device, and/or on an electronic control device of a remote device.

Further in general, different steps in the method may be performed or executed by different electronic processing units comprised by different devices, even at different locations.

In any method disclosed herein, the method may further comprise obtaining further graphical data of the location of interest, for example by the remote device, based on the user input data indicative of the location of interest in the graphical data, and storing the further graphical data. The further graphical data may for example be one or more additional frames of photo or video comprising visual data on the location of interest, and can be further used to train the machine learning algorithm.

The further graphical data may be obtained with the same or a different device used to obtain the graphical data sent to the remote operation device. The further graphical data may be obtained at a different angle, a different resolution, a different level of detail, or any other different parameter. The location of interest may also be indicated in the further graphical data, such that the location of interest can be used for training the machine learning algorithm.

With the further graphical data, for example, a single indicated location of interest may be used to generate multiple training data for the machine learning algorithm.

The further graphical data may be taken at any moment in time after the operator has provided the user input data indicative of the location of interest, for example within seconds, minutes, hours, days, or even multiple days.

It will be understood that any of the options, for example optional method steps or examples of definitions, disclosed above may be readily applied to the embodiments discussed below in conjunction with the figures. Also, options disclosed in conjunction with the figures may be readily applied to embodiments of the method disclosed above.

### BRIEF DESCRIPTION OF THE FIGURES

In the figures:
Fig. 1A schematically depicts an embodiment of a method of real-time controlling a remote device to perform a task;
Fig. 1B schematically depicts another embodiment of a method of real-time controlling a remote device to perform a task; and
Fig. 2 schematically shows a weeding robot as an example of a remote device in a method real-time controlling the weeding robot to perform a weeding task.

### DETAILED DESCRIPTION OF THE FIGURES

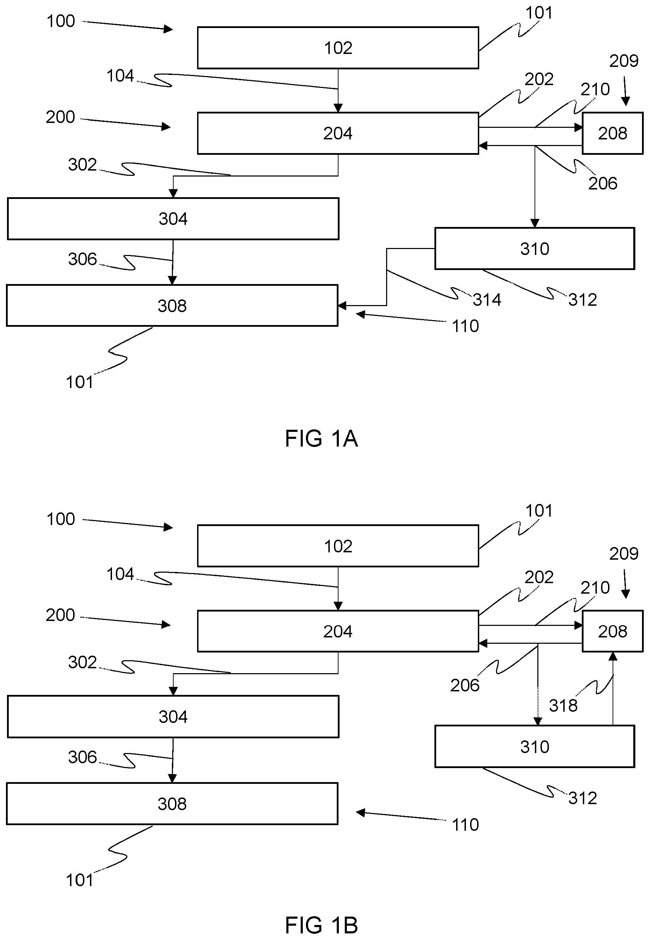

Fig. 1A schematically depicts an embodiment of a method of real-time controlling a remote device to perform a task. The method comprises a step 102 of obtaining graphical data 104 at a remote location 100, for example using a remote device 101 or any other device comprising one or more cameras. The graphical data 104 is sent to a remote operation device 202, as raw data or after one or more steps of manipulating the graphical data at the remote location 100. Manipulation of the graphical data may be performed for example by the remote device.

In a further step in the method, user input data 206 is obtained from an operator 208, which user input data is indicative of a location of interest in the graphical data 104. To allow the operator 208 to base the user input data 206 on the graphical data 104, a visual representation 210 of the graphical data is shown to the operator 208, for example using the remote operation device 202, for example when the remote operation device comprises one or more electronic displays. Alternatively, the visual representation 210 of the graphical data may be provided to the operator 208 using a separate electronic device, arranged to receive the graphical data 104, and for example comprising one or more electronic displays.

For example, based on the user input data 206, location data 302 indicative of the location of interest is used in a step 304 of generating a control signal 306 for controlling a remote device 101 to perform a task based on the user input data. Using the control signal 306, the method comprises a step 308 of controlling the remote device 101 to perform the task at the location of interest 110. To perform the task, the remote device 101 may remain at the same position as it had when obtaining the graphical data, or the remote device 101 may have moved. In particular, the remote device 101 may have moved by virtue of a previous instruction to move, for example when the remote device 101 is moving along a predetermined path with a particular velocity. Additionally or alternatively, the control signal 306 may control the remote device 101 to be moved in order to perform the task at the location of interest 110.

As schematically depicted in Fig. 1A, the method as an option further comprises a step 310 of using the user input data 206 as training data for training a machine learning algorithm 312. Additionally, although not depicted in Fig. 1A, also the graphical data 104 or at least part thereof may be supplied to the machine learning algorithm 312. In the embodiment of Fig. 1A, the algorithm 312 is depicted as arranged for generating at least part of a control signal 314 for controlling the remote device 101. The step 308 of controlling the remote device 101 to perform the task at the location of interest 110 may thus be partially based on a control signal 314 generated by the algorithm 312. In Fig. 1A, the control signal 314 is shown as being sent directly to the remote device 101. However, embodiments are also envisioned in which the control signal 314 is sent to the remote operation device 202.

A control signal 314 provided by the machine learning algorithm 312 may for example correct the control signal 306 generated based on the user input data. Additionally or alternatively, the control signal 314 provided by the machine learning algorithm 312 may for example increase accuracy and/or precision of the task performed compared to using only the control signal 306 generated based on the user input data.

Fig. 1B shows a similar schematic depiction of an embodiment of a method of real-time controlling a remote device to perform a task. However, contrary to the embodiment of Fig. 1A, now the algorithm is arranged for providing a suggested location of interest 318 to the operator 208. In Fig. 1B, the suggested location of interest 318 is shown directly to the operator, for example visually via one or more displays. Additionally or alternatively, the suggested location of interest 318 may be shown indirectly to the operator, for example after being sent to the remote operation device 202. The suggested location of interest 318 may be appended to the graphical data 104 shown to the operator in the visual representation 210.

In Figs. 1A and 1B, the remote device may for example be a weeding robot, a litter removal robot, a cleaning robot, or any other remote device arranged to perform one or more tasks in the remote environment. Examples of tasks are removal of weeds, removal of garbage, picking-up litter, and/or planting seeds, seedlings, and other plants and flora

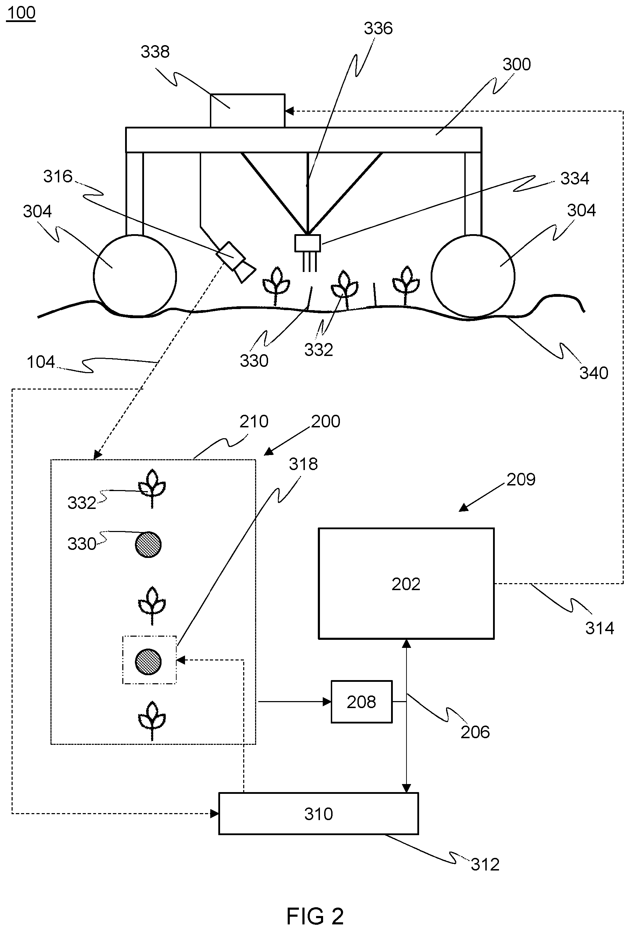

Fig. 2 schematically shows a weeding robot 300 as an example of a remote device. The weeding robot 300 comprises a set of wheels 304 for moving the robot on a farmland 340. In the soil of the farmland 340, crops 332 and weeds 330 grow. A task of the weeding robot 300 is to damage or destroy the weeds 330, while preferably not harming the crops 332. The weeding robot 300 comprises a camera 316 arranged for obtaining graphical data 104 in which at least part of the farmland 340 is visible, in particular wherein at least one weed 330 is visible in use. The robot 300 is present at the remote location 100.

At least part of the graphical data 104 is shown to the operator 208 at an operator location 209, which may be any location at any distance from the remote location 100. Fig. 2 schematically shows a visual representation 210 of the graphical data 104, which in this example is a general top view of part of the farmland 340 shown a number of crops 332 and weeds 330; not all of which are provided with a reference numeral for clarity of the figure. The visual representation 210 can be observed by the operator 208, and the operator 208 can provide user input data 206 indicative of a location of interest in the graphical data based on the visual representation 210.

The user input data 206 is provided to the remote operation device 202 at the remote location 209. A control signal 314 is generated based on the user input data 206. In the example of Fig. 2, the control signal 314 is generated by the remote operation device 202, and sent to a local controller 338 of the remote device 101. The local controller 338 controls an actuator 334 of the remote device 101 to perform a task, such as the removal or damaging of weed 330. In particular, the control signal 314 transferred at least partially via a wireless network, such as a broadband cellular network.

Alternatively, the control signal 314 may be generated by the local controller 338 of the remote device 101, based on user input data received by the local controller 338. The user input data may for example be transferred to the local controller 338 by the remote operation device 202, in particular at least partially via a wireless network, such as a broadband cellular network.

As a particular option depicted in Fig. 2, the algorithm 310 is trained to provide a suggested location of interest 318 in the graphical data 104. The suggested location of interest 318 may be visually shown to the operator 208, for example as an overlay in the visual representation 210 - shown in Fig. 2 as a dashed-dotted-dotted rectangle 318. For training the algorithm 310, graphical data 104 and user input data 206 are provided to the algorithm 310. The user input data 206 may be used to label the graphical data 104, and is the user input data and the graphical data are therefore preferably of the same timeframe, or at least from overlapping timeframes.

In particular when a suggested location of interest 318 is shown to the operator 208, the user input data 206 may be indicative of a confirmation of the suggested location of interest 318, or a rejection of the suggested location of interest 318. In such cases, the suggested location of interest 318 combined with the confirmation or rejection are used to generate the control signal for controlling the remote device to perform a task.

## Claims

1. A method of real-time controlling a remote device to perform a task, the method comprising steps of:
- obtaining graphical data, such as image frames forming a video, of surroundings of the remote device, such as an area of farmland or beach;
- sending the graphical data to a remote operation device;
- obtaining user input data from an operator, which user input data is indicative of a location of interest in the graphical data;
- generating a control signal for controlling the remote device to perform a task based on the user input data; and
- using the control signal for controlling the remote device to perform the task at or near the location of interest;
wherein the user input data is further used as training data for training a machine learning algorithm, which algorithm is arranged for:
- generating at least part of a control signal for controlling the remote device; and/or
- providing a suggested location of interest to the operator.

2. Method according to claim 1, wherein the remote device is positioned on a volume of sand, such as a beach or a plot of farmland and wherein the remote device is a weeding robot arranged for performing a task of damaging, destroying or removing weed or the remote device is a garbage or litter removal robot arranged for performing a task of removing garbage, in particular on a beach, field or grassland.

3. Method according to any of the preceding claims, wherein the machine learning algorithm is trained on the fly using the user input data provided by the operator for real-time controlling the remote device.

4. Method according to any of the preceding claims, wherein the machine learning algorithm is arranged for providing a suggested location of interest to the operator based on the obtained graphical data, and further comprising a step of visually presenting the suggested location of interest to the operator.

5. Method according to any of the preceding claims, wherein the machine learning algorithm is arranged for providing a suggested location of interest as graphical data to the remote operation device.

6. Method according to any of the claims 4 or 5, wherein the user input data is indicative of a confirmation of a suggested location of interest suggested by the machine learning algorithm, and the control signal for controlling the remote device to perform the task is generated based on the suggested location of interest.

7. Method according to any of the preceding claims, wherein the remote operation device is positioned at a distance from the remote device, in particular wherein the remote device is positioned out of sight from the remote operation device.

8. Method according to any of the preceding claims, wherein the user input data is transmitted to the remote device, and the control signal is generated by the remote device.

9. Method according to any of the preceding claims, wherein the control signal is generated by the remote operation device, and the control signal is transmitted to the remote device.

10. Method according to any of the preceding claims, further comprising:
- obtaining additional graphical data on the location of interest after controlling the remote device to perform the task at or near the location of interest; and
- using the additional graphical data as training data for training the machine learning algorithm,
in particular wherein the method further comprises
- providing the additional graphical data to the operator;
- obtaining additional user input data from the operator indicative of an evaluation of the task performed at the location of interest; and
- using the additional user input data as training data for training the machine learning algorithm.

11. Method according to any of the preceding claims, wherein the algorithm is arranged for providing a suggested location of interest to the operator, and wherein the method further comprises:
- storing historic graphical data of surroundings of the remote device;
- finding matching location data in the historic graphical data matching with the location data indicative of a location of interest in present graphical data; and
- training the algorithm based on the user input data and the matching location data in the historic graphical data.

12. Method according to any of the preceding claims, wherein graphical data is provided to the operator of surroundings of multiple remote devices, user input data is obtained from the operator indicative of locations of interest in the graphical data of the multiple remote devices, control signals are generated for controlling the multiple remote devices, and the user input data is further used as training data for training a single machine learning algorithm.

13. Method according to any of the preceding claims, wherein the algorithm is arranged for:
- generating at least part of a control signal for controlling multiple remote devices; and/or
- providing a suggested location of interest to multiple operators.

14. Method according to any of the preceding claims, wherein the location of interest represents a single location, which can for example be described as a two-dimensional or three-dimension coordinate, or a particular point or pixel in the graphical data or wherein the location of interest represents an area or a volume, which may be defined by a perimeter or bounding box, a set of points and/or a set of pixels in the graphical data.

15. Method according to any of the preceding claims, further comprising obtaining further graphical data of the location of interest, for example by the remote device, based on the user input data indicative of the location of interest in the graphical data, and storing the further graphical data.

## Patentansprüche

1. Verfahren zur Echtzeitsteuerung einer fernen Vorrichtung zur Durchführung einer Aufgabe, wobei das Verfahren die folgenden Schritte umfasst:
- Erhalten von graphischen Daten, wie z.B. Einzelbilder, die ein Video bilden, von der Umgebung der fernen Vorrichtung, wie z.B. ein Ackerland oder ein Strand;
- Senden der graphischen Daten an eine Fernbetriebsvorrichtung;
- Erhalten von Benutzereingabedaten von einem Bediener, wobei die Benutzereingabedaten einen Ort von Interesse in den graphischen Daten angeben;
- Erzeugen eines Steuersignals zur Steuerung der fernen Vorrichtung zur Durchführung einer Aufgabe auf der Grundlage der Benutzereingabedaten; und
- Verwendung des Steuersignals zur Steuerung der fernen Vorrichtung, um die Aufgabe am oder in der Nähe des gewünschten Ortes durchzuführen;
wobei die Benutzereingabedaten ferner als Trainingsdaten zum Trainieren eines Algorithmus für maschinelles Lernen verwendet werden, wobei der Algorithmus für Folgendes eingerichtet ist:
- Erzeugen zumindest eines Teils eines Steuersignals zur Steuerung der fernen Vorrichtung; und/oder
- Bereitstellung eines Vorschlags für einen Ort von Interesse für den Bediener.

2. Verfahren nach Anspruch 1, bei dem die fernen Vorrichtung auf einer Sandfläche, wie z. B. einem Strand oder einem Stück Ackerland, positioniert wird und wobei es sich bei der fernen Vorrichtung um einen Unkrautjätroboter handelt, der für die Durchführung einer Aufgabe zur Beschädigung, Zerstörung oder Entfernung von Unkraut eingerichtet ist, oder wobei es sich bei der fernen Vorrichtung um einen Müll- oder Abfallbeseitigungsroboter handelt, der für die Durchführung einer Aufgabe zur Entfernung von Müll eingerichtet ist, insbesondere auf einem Strand, einem Feld oder einer Wiese.

3. Verfahren nach einem der vorhergehenden Ansprüche, wobei der Algorithmus für maschinelles Lernen unter Verwendung der Benutzereingabedaten, die von dem Bediener für die Echtzeitsteuerung der fernen Vorrichtung bereitgestellt werden, im laufenden Betrieb trainiert wird.

4. Verfahren nach einem der vorhergehenden Ansprüche, wobei der Algorithmus für maschinelles Lernen so beschaffen ist, dass er dem Bediener auf der Grundlage der erhaltenen graphischen Daten einen vorgeschlagenen Ort von Interesse zur Verfügung stellt, und ferner einen Schritt umfasst, bei dem der vorgeschlagene Ort von Interesse dem Bediener visuell präsentiert wird.

5. Verfahren nach einem der vorhergehenden Ansprüche, wobei der Algorithmus für maschinelles Lernen so beschaffen ist, dass er der Fernbetriebsvorrichtung einen vorgeschlagenen Ort von Interesse als graphische Daten bereitstellt.

6. Verfahren nach einem der Ansprüche 4 oder 5, wobei die Benutzereingabedaten eine Bestätigung eines vom Algorithmus für maschinelles Lernen vorgeschlagenen Ortes von Interesse anzeigen und das Steuersignal zur Steuerung der fernen Vorrichtung zur Durchführung der Aufgabe auf der Grundlage des vorgeschlagenen Ortes von Interesse erzeugt wird.

7. Verfahren nach einem der vorhergehenden Ansprüche, wobei die Fernbetriebsvorrichtung in einem Abstand von der fernen Vorrichtung angeordnet ist, insbesondere wobei die fernen Vorrichtung außer Sichtweite der Fernbetriebsvorrichtung angeordnet ist.

8. Verfahren nach einem der vorhergehenden Ansprüche, wobei die Benutzereingabedaten an die fernen Vorrichtung übertragen werden und das Steuersignal von der fernen Vorrichtung erzeugt wird.

9. Verfahren nach einem der vorhergehenden Ansprüche, wobei das Steuersignal von der Fernbetriebsvorrichtung erzeugt wird und das Steuersignal an die fernen Vorrichtung übertragen wird.

10. Verfahren nach einem der vorangegangenen Ansprüche, das ferner Folgendes umfasst:
- Erhalten zusätzlicher graphischer Daten über den Ort von Interesse, nachdem die fernen Vorrichtung so gesteuert wurde, dass sie die Aufgabe am oder in der Nähe des Ortes von Interesse durchführt; und
- Verwendung der zusätzlichen graphischen Daten als Trainingsdaten für das Training des Algorithmus für maschinelles Lernen,
wobei das Verfahren insbesondere Folgendes umfasst
- Bereitstellung der zusätzlichen graphischen Daten für den Bediener;
- Erhalten zusätzlicher Benutzereingabedaten vom Bediener, die eine Bewertung der am Ort des Interesses durchgeführten Aufgabe anzeigen; und
- Verwendung der zusätzlichen Benutzereingabedaten als Trainingsdaten für das Training des Algorithmus für maschinelles Lernen.

11. Verfahren nach einem der vorhergehenden Ansprüche, wobei der Algorithmus so eingerichtet ist, dass er dem Bediener einen vorgeschlagenen Ort von Interesse bereitstellt, und wobei das Verfahren ferner umfasst:
- Speicherung historischer graphischer Daten der Umgebung der fernen Vorrichtung;
- Finden passender Ortsdaten in den historischen graphischen Daten, die mit den Ortsdaten übereinstimmen, die einen Ort von Interesse in den aktuellen graphischen Daten anzeigen; und
- Training des Algorithmus auf der Grundlage der Benutzereingabedaten und der übereinstimmenden Ortsdaten in den historischen graphischen Daten.

12. Verfahren nach einem der vorhergehenden Ansprüche, wobei dem Bediener graphische Daten über die Umgebung mehrerer ferner Vorrichtungen zur Verfügung gestellt werden, vom Bediener Benutzereingabedaten erhalten werden, die Orte von Interesse in den graphischen Daten der mehreren fernen Vorrichtungen anzeigen, Steuersignale zur Steuerung der mehreren fernen Vorrichtungen erzeugt werden und die Benutzereingabedaten ferner als Trainingsdaten zum Trainieren eines einzelnen Algorithmus für maschinelles Lernen verwendet werden.

13. Verfahren nach einem der vorhergehenden Ansprüche, wobei der Algorithmus eingerichtet ist zur:
- Erzeugung zumindest eines Teils eines Steuersignals zur Steuerung mehrerer ferner Vorrichtungen; und/oder
- Bereitstellung eines Vorschlags für einen Ort von Interesse für mehrere Bediener.

14. Verfahren nach einem der vorhergehenden Ansprüche, wobei der Ort von Interesse einen einzelnen Ort darstellt, der beispielsweise als eine zweidimensionale oder dreidimensionale Koordinate oder ein bestimmter Punkt oder Pixel in den graphischen Daten beschrieben werden kann, oder wobei der Ort von Interesse ein Gebiet oder ein Volumen darstellt, das durch einen Umfang oder eine Bounding Box, einen Satz von Punkten und/oder einen Satz von Pixeln in den graphischen Daten definiert sein kann.

15. Verfahren nach einem der vorangehenden Ansprüche, das ferner das Erhalten weiterer graphischer Daten des Ortes von Interesse, beispielsweise durch die fernen Vorrichtung, basierend auf den Benutzereingabedaten, die den Ort von Interesse in den graphischen Daten anzeigen, und das Speichern der weiteren graphischen Daten umfasst.

## Revendications

1. Procédé de commande en temps réel d'un dispositif distant afin d'exécuter une tâche, le procédé comprenant les étapes consistant à :
- obtenir des données graphiques, telles que des trames d'images qui forment une vidéo, de l'environnement du dispositif distant, comme une zone de terres agricoles ou une plage ;
- envoyer les données graphiques à un dispositif de fonctionnement distant ;
- obtenir des données d'entrée utilisateur de la part d'un opérateur, lesdites données d'entrée utilisateur indiquant un emplacement d'intérêt dans les données graphiques ;
- générer un signal de commande destiné à commander le dispositif distant afin d'exécuter une tâche sur la base des données d'entrée utilisateur ; et
- utiliser le signal de commande pour commander le dispositif distant afin d'exécuter la tâche au niveau ou à proximité de l'emplacement d'intérêt ;
dans lequel les données d'entrée utilisateur sont en outre utilisées comme des données d'entraînement pour entraîner un algorithme d'apprentissage machine, ledit algorithme étant prévu pour :
- générer au moins une partie d'un signal de commande destiné à commander le dispositif distant ; et/ou
- fournir un emplacement d'intérêt suggéré à l'opérateur.

2. Procédé selon la revendication 1, dans lequel le dispositif distant est positionné sur un volume de sable, comme une plage ou une parcelle de terres agricoles, et dans lequel le dispositif distant est un robot de désherbage prévu pour exécuter une tâche d'endommagement, de destruction ou d'élimination de mauvaises herbes, ou le dispositif distant est un robot d'élimination de déchets ou de détritus prévu pour exécuter une tâche d'élimination de déchets, en particulier sur une plage, dans un champ ou dans une prairie.

3. Procédé selon l'une quelconque des revendications précédentes, dans lequel l'algorithme d'apprentissage machine est entraîné à la volée à l'aide des données d'entrée utilisateur fournies par l'opérateur pour la commande en temps réel du dispositif distant.

4. Procédé selon l'une quelconque des revendications précédentes, dans lequel l'algorithme d'apprentissage machine est prévu pour fournir un emplacement d'intérêt suggéré à l'opérateur sur la base des données graphiques obtenues, et comprenant en outre une étape de présentation visuelle de l'emplacement d'intérêt suggéré à l'opérateur.

5. Procédé selon l'une quelconque des revendications précédentes, dans lequel l'algorithme d'apprentissage machine est prévu pour fournir un emplacement d'intérêt suggéré sous forme de données graphiques au dispositif de fonctionnement distant.

6. Procédé selon l'une quelconque des revendications 4 ou 5, dans lequel les données d'entrée utilisateur indiquent une confirmation d'un emplacement d'intérêt suggéré par l'algorithme d'apprentissage machine, et le signal de commande destiné à commander le dispositif distant afin d'exécuter la tâche est généré sur la base de l'emplacement d'intérêt suggéré.

7. Procédé selon l'une quelconque des revendications précédentes, dans lequel le dispositif de fonctionnement distant est positionné à une distance du dispositif distant, dans lequel, en particulier, le dispositif distant est positionné hors du champ de vision du dispositif de fonctionnement distant.

8. Procédé selon l'une quelconque des revendications précédentes, dans lequel les données d'entrée utilisateur sont transmises au dispositif distant, et le signal de commande est généré par le dispositif distant.

9. Procédé selon l'une quelconque des revendications précédentes, dans lequel le signal de commande est généré par le dispositif de fonctionnement distant, et le signal de commande est transmis au dispositif distant.

10. Procédé selon l'une quelconque des revendications précédentes, comprenant en outre :
- l'obtention de données graphiques supplémentaires sur l'emplacement d'intérêt après avoir commandé le dispositif distant afin d'exécuter la tâche au niveau ou à proximité de l'emplacement d'intérêt ; et
- l'utilisation des données graphiques supplémentaires comme données d'entraînement pour entraîner l'algorithme d'apprentissage machine,
dans lequel, en particulier, le procédé comprend en outre
- la fourniture des données graphiques supplémentaires à l'opérateur ;
- l'obtention de données d'entrée utilisateur supplémentaires de la part de l'opérateur, qui indiquent une évaluation de la tâche exécutée à l'emplacement d'intérêt ; et
- l'utilisation des données d'entrée utilisateur supplémentaires comme des données d'entraînement pour entraîner l'algorithme d'apprentissage machine.

11. Procédé selon l'une quelconque des revendications précédentes, dans lequel l'algorithme est prévu pour fournir un emplacement d'intérêt suggéré à l'opérateur, et dans lequel le procédé comprend en outre :
- le stockage de données graphiques historiques de l'environnement du dispositif distant ;
- la recherche de données d'emplacement correspondantes dans les données graphiques historiques qui correspondent aux données d'emplacement qui indiquent un emplacement d'intérêt dans les présentes données graphiques ;
et
- l'entraînement de l'algorithme sur la base des données d'entrée utilisateur et des données d'emplacement correspondantes dans les données graphiques historiques.

12. Procédé selon l'une quelconque des revendications précédentes, dans lequel des données graphiques de l'environnement de multiples dispositifs distants sont fournies à l'opérateur, des données d'entrée utilisateur qui indiquent des emplacements d'intérêt dans les données graphiques des multiples dispositifs distants sont obtenues de la part de l'opérateur, des signaux de commande sont générés afin de commander les multiples dispositifs distants, et les données d'entrée utilisateur sont en outre utilisées comme des données d'entraînement pour entraîner un seul algorithme d'apprentissage machine.

13. Procédé selon l'une quelconque des revendications précédentes, dans lequel l'algorithme est prévu pour :
- générer au moins une partie d'un signal de commande destiné à commander de multiples dispositifs distants ; et/ou
- fournir un emplacement d'intérêt suggéré à de multiples opérateurs.

14. Procédé selon l'une quelconque des revendications précédentes, dans lequel l'emplacement d'intérêt représente un seul emplacement, qui peut par exemple être décrit comme une coordonnée en deux dimensions ou en trois dimensions, ou un point ou un pixel particulier dans les données graphiques, ou dans lequel l'emplacement d'intérêt représente une zone ou un volume, qui peut être défini(e) par un périmètre ou une zone de délimitation, un ensemble de points et/ou un ensemble de pixels dans les données graphiques.

15. Procédé selon l'une quelconque des revendications précédentes, comprenant en outre l'obtention d'autres données graphiques de l'emplacement d'intérêt, par exemple par le dispositif distant, sur la base des données d'entrée utilisateur qui indiquent l'emplacement d'intérêt dans les données graphiques, et le stockage des autres données graphiques.
